(19)

Europäisches Patentamt

European Patent Office

Office européen des brevets

(11) **EP 4 152 736 A1**

(12) **EUROPEAN PATENT APPLICATION**
published in accordance with Art. 153(4) EPC

(43) Date of publication:
**22.03.2023 Bulletin 2023/12**

(21) Application number: **21825942.2**

(22) Date of filing: **12.06.2021**

(51) International Patent Classification (IPC):
***H04M 1/725*** (2006.01)

(52) Cooperative Patent Classification (CPC):
**H04M 1/72403; H04M 1/72409; H04M 1/72442; H04M 1/72454; H04M 1/72484; H04M 1/725**

(86) International application number:
**PCT/CN2021/099913**

(87) International publication number:
**WO 2021/254294 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2020 CN 202010546635**

(71) Applicant: **Huawei Technologies Co., Ltd.**
**Longgang District**
**Shenzhen, Guangdong 518129 (CN)**

(72) Inventor: **YANG, Xiao**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **METHOD FOR SWITCHING AUDIO OUTPUT CHANNEL, APPARATUS, AND ELECTRONIC DEVICE**

(57)    An audio output channel switching method is applied to an electronic device having a built-in earpiece and a first sensor. The first sensor is disposed at a first location in the electronic device. The method includes: When an electronic device is connected to an external audio device, and an audio output channel of the electronic device is the external audio device, the electronic device detects a first operation. In response to the first operation, the electronic device determines a first distance between the electronic device and the external audio device. The electronic device determines a second distance between an covering object and a first location based on a detection signal of the first sensor. When the first distance is greater than a first distance threshold, and the second distance is less than a second distance threshold, the electronic device switches the audio output channel from the external audio device to a built-in earpiece of the electronic device. The first distance and the second distance are determined and compared, so that the audio output channel may be automatically switched for the electronic device.

FIG. 6

**Description**

This application claims priority to Chinese Patent Application No. 202010546635.7, filed with the China National Intellectual Property Administration on June 16, 2020, and entitled "AUDIO OUTPUT CHANNEL SWITCHING METHOD AND APPARATUS AND ELECTRONIC DEVICE", which is incorporated herein by reference in its entirety.

**TECHNICAL FIELD**

The present invention relates to electrical communication technologies, and in particular, to an audio output channel switching method and apparatus and an electronic device.

**BACKGROUND**

Usually, an electronic device such as a mobile phone or a PDA (Personal Digital Assistant, personal digital assistant) may be connected to an external audio device such as a portable Bluetooth headset or a vehicle-mounted Bluetooth speaker. Through a connection to the external audio device, for example, a Bluetooth (Bluetooth) connection, within an effective Bluetooth range of the electronic device and the external audio device, an audio output channel may be switched from a speaker or an earpiece disposed on a body of the electronic device to the external audio device. Therefore, it is convenient for a user to use.

The electronic device is connected to the external audio device, for example, a mobile phone is connected to a Bluetooth headset to input/output audio. In this case, sometimes the user does not wear the Bluetooth headset, but a connection between the mobile phone and the Bluetooth headset is not released. If the user carries the mobile phone away from the Bluetooth headset, but a distance between the mobile phone and the Bluetooth headset does not exceed an effective distance for maintaining the Bluetooth connection between the mobile phone and the Bluetooth headset, for example, when the user carries the mobile phone about 8 meters away from the Bluetooth headset, an audio output channel of the mobile phone is still the Bluetooth headset. If the user needs to answer an incoming call at this moment, in order to switch the incoming call to an earpiece of the mobile phone, the user needs to find the mobile phone or the Bluetooth headset and perform a manual switching operation, and then the user can normally answer the incoming call by using the mobile phone. In this case, when the user forgets that the mobile phone of the user is connected to the Bluetooth headset, the user cannot hear any sound when answering the call by using the mobile phone, and mistakenly considers that the user cannot hear a voice of the other party due to a call signal problem. This situation severely affects user experience.

When an electronic device is connected to a headset, switching an audio output channel from the headset back to the electronic device needs to depend on a manual operation of the user but cannot be automatically performed. Therefore, a switching operation performed when the user uses the headset is not simple and convenient enough.

**SUMMARY**

This application provides an audio output channel switching method and apparatus and an electronic device. According to the method, an audio output manner of the electronic device can be automatically switched without a manual operation by a user. This improves user experience in using an external audio device.

According to a first aspect, this application provides an audio output channel switching method, applied to an electronic device having a built-in earpiece and a first sensor. The first sensor is disposed at a first location in the electronic device. The method includes: When the electronic device is connected to an external audio device, and an audio output channel of the electronic device is the external audio device, the electronic device detects a first operation. In response to the first operation, the electronic device determines a first distance between the electronic device and the external audio device. The electronic device determines a second distance between an covering object and the first location based on a detection signal of the first sensor. When the first distance is greater than a first distance threshold, and the second distance is less than a second distance threshold, the electronic device switches the audio output channel from the external audio device to the built-in earpiece of the electronic device. According to the switching method provided in this application, it is determined that a distance between a user and the external audio device is greater than the first distance threshold and a distance from the first location near the built-in earpiece is less than the second distance threshold, so that the audio output channel can be automatically switched. This is convenient for the user to listen to audio by using the earpiece.

According to the first aspect, in a first implementation of the first aspect, the first location is near the built-in earpiece and the first sensor is an optical proximity sensor. The optical proximity sensor is configured to determine whether the user is far away from or close to the built-in earpiece, to determine an intent of the user to answer audio by using the earpiece.

According to any one of the first aspect or the foregoing implementation of the first aspect, in a second implementation of the first aspect, the first operation is answering a call or playing a voice message. When the user answers an incoming call or taps a voice message, the audio output channel may be automatically switched. This improves user experience in using the electronic device.

According to any one of the first aspect or the foregoing implementations of the first aspect, in a third implementation of the first aspect, a Bluetooth connection is established between the electronic device and the external audio device. That the electronic device determines the first distance between the electronic device and the external audio device includes: determining the first distance based on a received signal strength indicator RSSI of the Bluetooth connection between the electronic device and the external audio device.

According to the third implementation of the first aspect, in a fourth implementation of the first aspect, that the electronic device determines the first distance between the electronic device and the external audio device further includes: determining the first distance based on the RSSI of the Bluetooth connection and a parameter of the external audio device. The parameter has a preset value. The first distance is determined based on the parameter having the preset value and the RSSI, so that a reliable result can be obtained, and the parameter does not need to be calibrated in advance.

According to the third implementation of the first aspect, in a fifth implementation of the first aspect, the method further includes: calibrating a parameter of the external audio device when the Bluetooth connection is established between the electronic device and the external audio device; and storing a calibrated parameter in the electronic device. When the external audio device is connected through Bluetooth, the user may be reminded to perform parameter calibration on the device. A calibration value matches the external audio device and is stored to determine the first distance when determining whether to automatically switch the audio output channel.

According to the fifth implementation of the first aspect, in a sixth implementation of the first aspect, that the electronic device determines the first distance between the electronic device and the external audio device further includes: determining the first distance based on the RSSI of the Bluetooth connection and the calibrated parameter. Based on the calibrated parameter value that matches the external audio device, a more accurate result may be obtained when the first distance is determined.

According to the fifth implementation of the first aspect, in a seventh implementation of the first aspect, the calibrated parameter includes a signal strength parameter A obtained when the electronic device is 1 meter apart from the external audio device, and/or an environment attenuation factor parameter n of the external audio device.

According to a second aspect, this application provides an audio output channel switching apparatus, applied to an electronic device having a built-in earpiece and a first sensor. The first sensor is disposed at a first location in the electronic device. The switching apparatus includes: a detection unit, configured to detect a first operation on the electronic device when the electronic device is connected to an external audio device, and an audio output channel of the electronic device is the external audio device; a determining unit, configured to: in response to the first operation, determine a first distance between the electronic device and the external audio device, and determine a second distance between an covering object and the first location based on a detection signal of the first sensor; and a switching unit, configured to: when the first distance is greater than a first distance threshold and the second distance is less than a second distance threshold, switch the audio output channel of the electronic device from the external audio device to the built-in earpiece of the electronic device. For the switching apparatus provided in this application, it is determined that a distance between a user and the external audio device is greater than the first distance threshold and a distance from the first location near the built-in earpiece is less than the second distance threshold, so that the audio output channel can be automatically switched. This is convenient for the user to listen to audio by using the earpiece.

According to the second aspect, in a first implementation of the second aspect, the first operation is answering a call or playing a voice message. When the user answers an incoming call or taps a voice message, the audio output channel may be automatically switched. This improves user experience in using the electronic device.

According to any one of the second aspect or the foregoing implementation of the second aspect, in a second implementation of the second aspect, a Bluetooth connection is established between the electronic device and the external audio device. That the determining unit determines the first distance includes: The determining unit determines the first distance based on a received signal strength indicator RSSI of the Bluetooth connection.

According to the second implementation of the second aspect, in a third implementation of the second aspect, that the determining unit determines the first distance further includes: The determining unit determines the first distance based on the RSSI of the Bluetooth connection and a parameter of the external audio device. The parameter has a preset value. The first distance is determined based on the parameter having the preset value and the RSSI, so that a reliable result can be obtained, and the parameter does not need to be calibrated in advance.

According to the second implementation of the second aspect, in a fourth implementation of the second aspect, the switching apparatus further includes: a calibration unit, configured to calibrate a parameter of the external audio device when the Bluetooth connection is established between the electronic device and the external audio device; and a storing unit, configured to store a calibrated parameter. When the Bluetooth connection is established between the electronic device and the external audio device, the user may be reminded to perform parameter calibration on the device. A calibration value obtained by using the calibration unit matches the external audio device and is stored in the storage unit to determine the first distance when determining whether to automatically switch the audio output channel.

According to the fourth implementation of the second aspect, in a fifth implementation of the second aspect, that the determining unit determines the first distance further includes: The determining unit determines the first distance based on the RSSI of the Bluetooth connection and the calibrated parameter. Based on the calibrated parameter value that matches the external audio device, a more accurate result may be obtained when the first distance is determined.

According to the fourth implementation of the second aspect, in a sixth implementation of the second aspect, the calibrated parameter includes a signal strength parameter A obtained when the electronic device is 1 meter apart from the external audio device, and/or an environment attenuation factor parameter n of the external audio device.

According to a third aspect, this application provides an electronic device. The electronic device includes: a touch sensor, configured to receive a first operation when the electronic device is connected to an external audio device, and an audio output channel of the electronic device is the external audio device; an optical proximity sensor, disposed near a built-in microphone of the electronic device; and a processor, configured to: in response to the first operation, determine whether a first distance between the electronic device and the external audio device is greater than a first distance threshold, and determine, based on a detection result from the optical proximity sensor, whether a second distance between an covering object and the built-in microphone is less than a second distance threshold. When the first distance is greater than the first distance threshold, and the second distance is less than the second distance threshold, the processor switches the audio output channel from the external audio device to the built-in earpiece of the electronic device. For the electronic device provided in this application, it is determined that a distance between a user and the external audio device is greater than the first distance threshold and a distance from the first location near the built-in earpiece is less than the second distance threshold, so that the audio output channel can be automatically switched. This is convenient for the user to listen to audio by using the earpiece.

According to the third aspect, in a first implementation of the third aspect, the electronic device further includes a communication module, configured to establish a Bluetooth connection to the external audio device. The processor is further configured to determine a received signal strength indicator RSSI of the Bluetooth connection.

According to the first implementation of the third aspect, in a second implementation of the third aspect, the processor is further configured to calibrate a parameter of the external audio device. The electronic device further includes a memory configured to store a calibrated parameter of the external audio device. The processor is further configured to calculate the first distance based on the RSSI of the Bluetooth connection and the calibrated parameter. Based on the calibrated parameter value that matches the external audio device, a more accurate result may be obtained when the first distance is determined.

According to a fourth aspect, this application provides a computer-readable storage medium, including instructions. When the instructions are run on an electronic device, the electronic device is enabled to perform the method according to any one of the foregoing implementations.

## BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3(a) to FIG. 3(c) are schematic diagrams in which an electronic device is connected to an external audio device according to an embodiment of this application;
FIG. 4 is a schematic diagram of an audio output channel switching scenario according to an embodiment of this application;
FIG. 5(a) and FIG. 5(b) are schematic diagrams of an audio output channel switching scenario according to an embodiment of this application;
FIG. 6 is a schematic flowchart of an audio output channel switching method according to an embodiment of this application;
FIG. 7(a) and FIG. 7(b) are schematic diagrams in which an audio output channel switching solution is enabled according to an embodiment of this application;
FIG. 8(a) and FIG. 8(b) are schematic diagrams in which an audio output channel switching solution is enabled according to an embodiment of this application;
FIG. 9(a) and FIG. 9(b) are schematic flowcharts of an audio output channel switching method according to an embodiment of this application; and
FIG. 10 is a schematic diagram of a structure of an audio output switching apparatus according to an embodiment of this application.

**DESCRIPTION OF EMBODIMENTS**

The following describes embodiments of this application with reference to the accompanying drawings in embodiments of this application.

It should be noted that the descriptions such as "first" and "second" in embodiments of this application are used to distinguish different messages, devices, modules, applications, or the like, which neither represent a sequence, nor impose a limitation that the "first" and the "second" are different types. The descriptions such as "first" and "second" are not limited quantities. For example, a "first application" may be one "first application", or may be a plurality of "first applications".

The term "A and/or B" in embodiments of this application describes only an association relationship for describing associated objects and represents that three relationships may exist. For example, only A exists, both A and B exist, and only B exists. In addition, the character "/" in embodiments of this application generally indicates an "or" relationship between the associated objects.

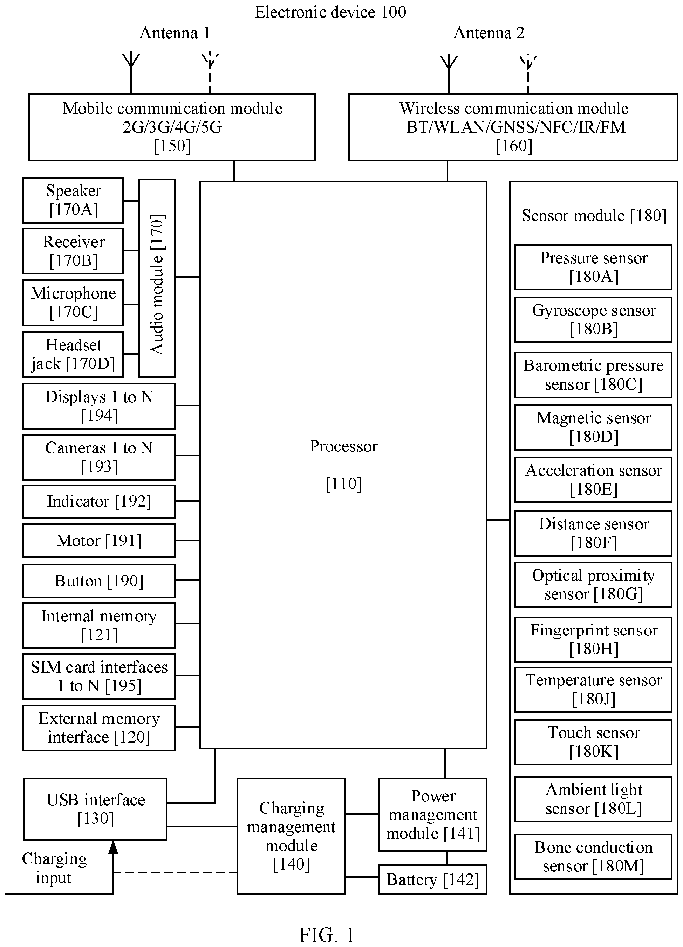

A method provided in embodiments of this application may be applied to a mobile device 100 shown in FIG. 1. FIG. 1 is a schematic diagram of a structure of an electronic device 100.

The electronic device 100, for example, an intelligent terminal, may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. The PCM interface may also be configured to perform audio communication, and sample, quantize, and code an analog signal. The UART interface is a universal serial data bus, and is configured to perform asynchronous communication.

The MIPI may be configured to connect the processor 110 to a peripheral component such as the display 194 or the camera 193. The MIPI includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. It may be understood that an interface connection relationship between the modules that is shown in this embodiment of the present disclosure is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The power management module 141 is configured to connect to the battery 142, the charging management module 140, and the processor 110. A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3 G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component along with the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. The camera 193 is configured to capture a static image or a video. An optical image of an object is generated through a lens, and is projected onto the photosensitive element.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) processing unit. The NPU quickly processes input information by referring to a structure of a biological neural network, for example, a transfer mode between human brain neurons, and may further continuously perform self-learning.

The external memory interface 120 may be configured to connect to an external storage card, for example, a micro-SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) and the like created when the electronic device 100 is used. In addition, the internal memory 121 may include a high speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

In some embodiments of this application, the internal memory is further configured to store a translation application and buffer all pictures generated in a running process of the translation application. After a user exits the translation application, all the buffered pictures may be automatically deleted.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode by using the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a moving posture of the electronic device 100. The barometric pressure sensor 180C is configured to measure barometric pressure. In some embodiments, the electronic device 100 calculates an altitude through the barometric pressure measured by the barometric pressure sensor 180C, to assist in positioning and navigation. The magnetic sensor 180D includes a Hall sensor. The acceleration sensor 180E may detect accelerations in various directions (usually on three axes) of the electronic device 100. The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature.

The touch sensor 180K is also referred to as a "touch component". The touch sensor 180K may be disposed in the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The indicator 192 may be an indicator light, and may be configured to indicate a charging state and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

In an embodiment of this application, when the electronic device 100 is connected to an external audio device by using the wireless communication module 160, for example, Bluetooth, the touch sensor 180K of the electronic device 100 detects a trigger event performed on or near the electronic device 100, for example, detects that a user answers an incoming call or taps a voice message. In response to the trigger event detected by the touch sensor 180K, the processor 110 determines whether a distance between the electronic device 100 and the external audio device is greater than a first distance threshold, and determines, by using the optical proximity sensor 180G, whether there is an covering object in a state from far to near relative to the electronic device 100. For example, the processor 110 determines, by using the optical proximity sensor 180G, whether a distance between the covering object and the receiver 170B, namely, the earpiece, is greater than a second distance threshold. When the processor 110 determines whether the distance between the electronic device 100 and the external audio device is greater than the first distance threshold, the processor calculates the distance between the electronic device 100 and the external audio device based on a received signal strength indicator RSSI determined by the wireless communication module 160, for example, an RSSI of a Bluetooth signal of the external audio device.

When the processor 110 determines that the distance between the electronic device 100 and the external audio device is greater than the first distance threshold, and determines that the distance between the covering object and the earpiece is less than the second distance threshold, the audio module 170 switches an audio output channel to the receiver 170B, namely, the earpiece, of the electronic device 100.

In another embodiment of this application, the processor 110 may further determine, by using the ambient optical sensor 180L, whether there is an covering object in a state of from far to near relative to the electronic device 100. For example, the processor 110 determines light inductance at the receiver 170B by using the ambient optical sensor 180L. When the processor 110 determines that a distance between the electronic device 100 and an external audio device is greater than a first distance threshold, and determines that light inductance at the receiver 170B is less than a light inductance threshold, the audio module 170 switches an audio output channel to the earpiece of the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate a software structure of the electronic device 100.

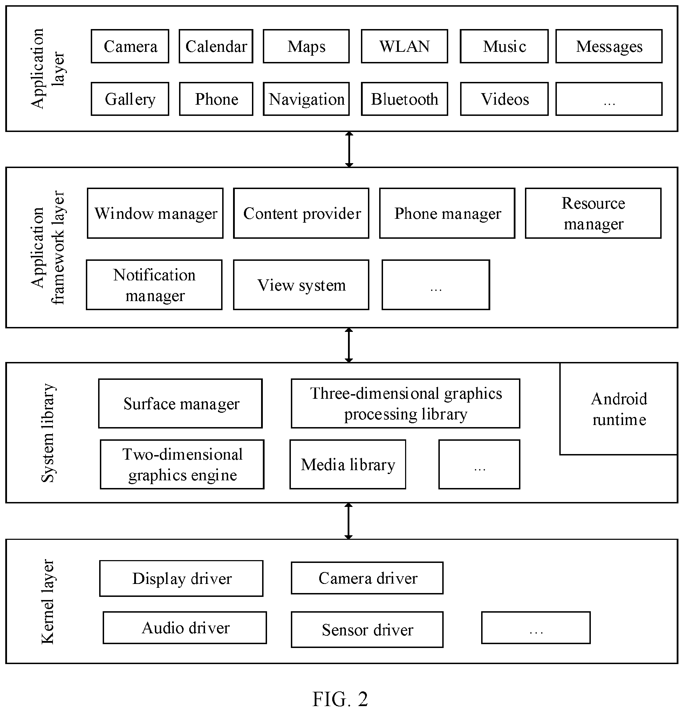

FIG. 2 is a block diagram of a software structure of the electronic device 100 shown in FIG. 1 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework to an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, dialed and answered calls, browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of call states (including answering, declining, and the like).

The resource manager provides, for an application, various resources such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime (Android Runtime) includes a kernel library and a virtual machine. The Android runtime is responsible for scheduling and management of the Android system.

The core library includes two parts: a function that needs to be invoked in java language, and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K shown in FIG. 1 receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch click operation, and a control corresponding to the click operation is a control of a camera application icon. The camera application invokes an interface of the application framework layer to start the camera application, then starts the camera driver by invoking the kernel layer, and captures a static image or a video by using the camera 193 shown in FIG. 1.

In some embodiments, the foregoing displaying may be displaying by using a display. The display has a displaying function, and the display may have a touch function, or may not have a touch function. An operation on a touch display may be implemented by using a virtual button, or may be implemented by tapping the touchscreen. An operation on a non-touch display may be implemented by using a physical key.

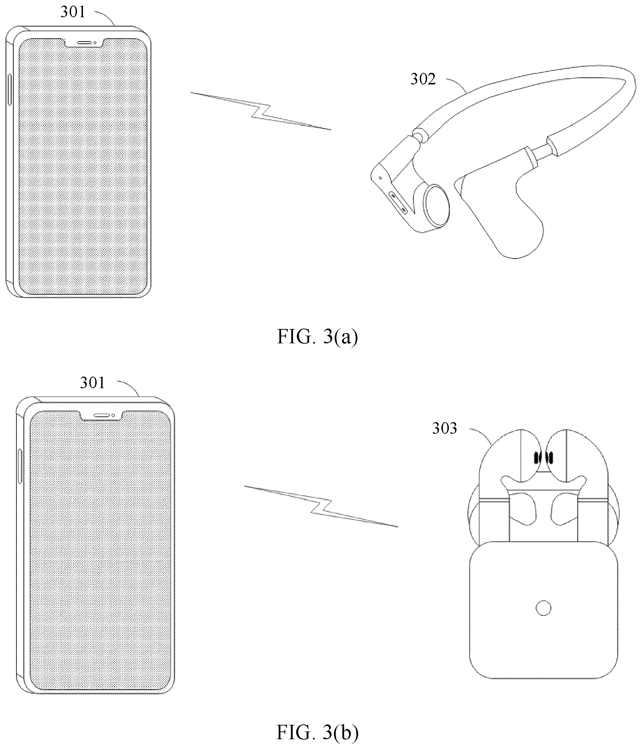

FIG. 3(a) to FIG. 3(c) are schematic diagrams in which an electronic device is connected to an external audio device according to an embodiment of this application. The electronic device may be the electronic device 100. In this embodiment of this application, a mobile phone 301 is used as an example to describe an embodiment of the electronic device 100.

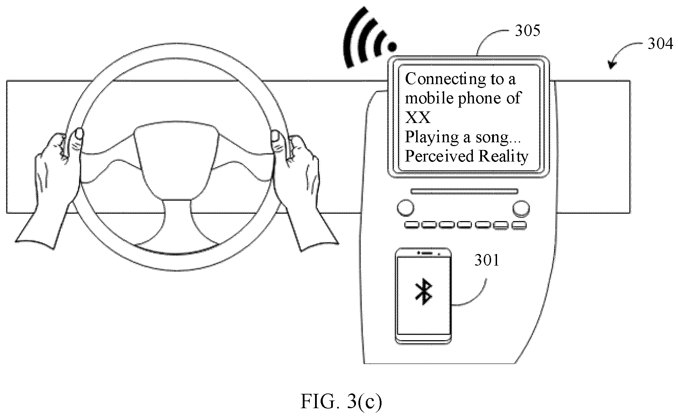

FIG. 3(a) shows that the mobile phone 301 is connected to, for example, through Bluetooth, a neckband headset 302 that is a wearable device. FIG. 3(b) shows that the mobile phone 301 is connected to, for example, through Bluetooth, a true wireless stereo (True Wireless Stereo, TWS) headset 303. FIG. 3(c) shows that the mobile phone 301 is connected to, for example, through Bluetooth, a vehicle-mounted Bluetooth speaker 305 of a vehicle 304. When the mobile phone 301 is connected to the external audio device, the audio output channel may be switched from a speaker or an earpiece (not shown in the figure) of the mobile phone to the external audio device, so that the user wears the neckband headset 302 or the TWS headset 303 to listen to audio output by the mobile phone 301 and input the audio to the mobile phone 301, or the user may listen to music played by the mobile phone 301 from the vehicle-mounted Bluetooth speaker 305 when driving.

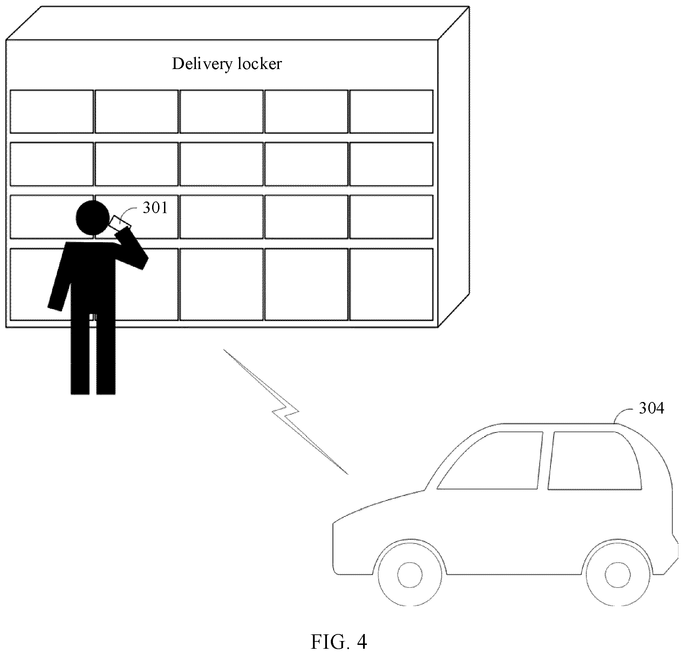

The electronic device, for example, the mobile phone 301 provided in this application may automatically switch an audio output device. FIG. 4 is a schematic diagram of an audio output device switching scenario. When the user gets off the vehicle 304 in FIG. 3(c) to pick up a parcel in a nearby delivery locker, the user does not stall the vehicle 304, to immediately return to the vehicle and continue driving after picking up the parcel. Therefore, even if the user has carried the mobile phone 301, the mobile phone 301 is still in a state of being connected to the vehicle-mounted Bluetooth speaker 305 of the vehicle 304.

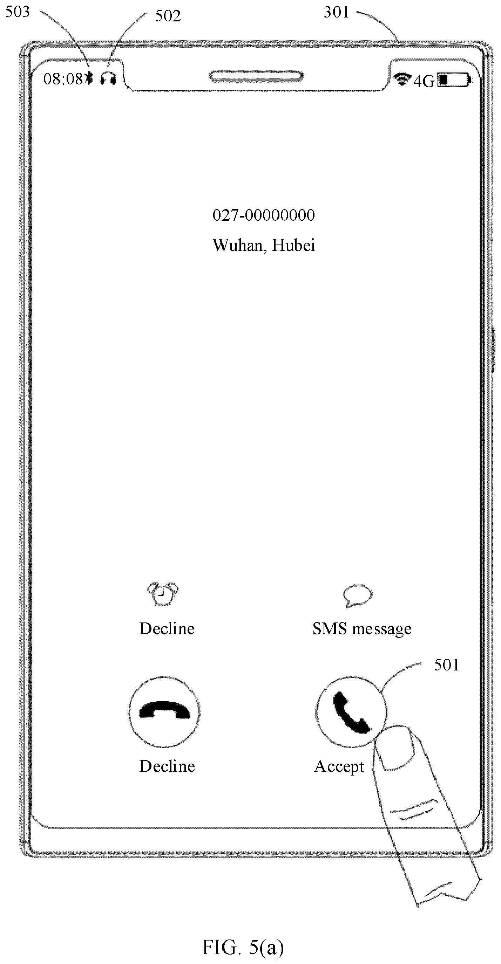

The user is outside the vehicle, for example, at a place about 3 m away from the vehicle 304. In this case, there is an incoming call on the mobile phone 301. The user taps an accept key 501, and puts the mobile phone 301 close to an ear to answer the incoming call, as shown in FIG. 4 and FIG. 5(a).

After the user taps the accept key 501, the mobile phone 301 determines that the mobile phone 301 is currently connected to the vehicle-mounted Bluetooth speaker 305 through Bluetooth, and determines that a distance between the mobile phone 301 and the vehicle-mounted Bluetooth speaker 305 exceeds the first distance threshold. The first distance threshold may be set to 1 to 5 m, for example, 1 m, 2 m, or 5 m. When the user puts the mobile phone 301 close to the ear to answer the call, the mobile phone 301 may determine, by using a sensor, a state in which the user gets close to the mobile phone 301. When determining that the user intends to answer the call by using the mobile phone 301, the mobile phone 301 switches an audio output channel of the mobile phone 301 to an earpiece of the mobile phone 301.

In an embodiment of this application, before the user taps the accept key 501, although a distance between the mobile phone 301 and the vehicle 304 exceeds the first distance threshold, the mobile phone 301 and the vehicle-mounted Bluetooth speaker 305 are still in an effective connection range. Therefore, the audio output channel of the mobile phone 301 is the vehicle-mounted Bluetooth speaker 305. After the user taps the accept key 501 and before the user puts the mobile phone 301 close to the ear, an answered incoming call audio is still output to the vehicle-mounted Bluetooth speaker 305. After the user puts the mobile phone 301 close to the ear, the mobile phone 301 determines, by using the sensor, that the user gets very close to the mobile phone 301, and then switches the audio output channel from the vehicle-mounted Bluetooth speaker 305 to the earpiece.

In an embodiment of this application, it should be understood, because a process of tapping the accept key 501 and then putting the mobile phone 301 close to the ear by the user is very fast, although the audio output channel of the mobile phone 301 is the vehicle-mounted Bluetooth speaker 305, an answered incoming call audio may not be output to the vehicle-mounted Bluetooth speaker 305 at this moment. Instead, when the mobile phone 301 determines, by using the sensor, that the user is gradually getting close to the mobile phone 301, the audio output channel is switched from the vehicle-mounted Bluetooth speaker 305 to the earpiece, to output the incoming call audio through the earpiece.

The sensor disposed on the mobile phone 301 includes but is not limited to an optical proximity sensor, a light sensor, or a temperature sensor. Any one of the foregoing types of sensors may be disposed near the earpiece of the mobile phone 301, or a combination of any plurality of types of sensors may be disposed.

A basic working principle of the optical proximity sensor is that light emitted by the optical proximity sensor is reflected by an covering object (such as a human face) that has a particular distance ahead of the optical proximity sensor, and is then received by the optical proximity sensor. The optical proximity sensor determines an amount of light loss based on the received light, and determines a distance between the covering object and the optical proximity sensor based on the amount of light loss. The light sensor can convert received light intensity into an electrical signal. The temperature sensor can convert a detected temperature into an electrical signal.

In this embodiment of this application, the optical proximity sensor is used as an example for description. The optical proximity sensor is disposed at a first location in the mobile phone 301, and the first location is near the earpiece of the mobile phone 301. When the user approaches the earpiece of the mobile phone 301, a second distance between the covering object and the optical proximity sensor may be determined based on a detection result from the optical proximity sensor, to determine whether the second distance is less than the second distance threshold. Alternatively, when the user moves away from the earpiece of the mobile phone 301, a third distance between the covering object and the optical proximity sensor may be determined based on a detection result from the optical proximity sensor, to determine whether the third distance is greater than the second distance threshold.

As shown in FIG. 4, in the foregoing automatic switching process of the audio output channel, after the user carries the mobile phone 301 and leaves the vehicle 304 for a specific distance, even if the user does not actively release a connection between the mobile phone 301 and the speaker 305 of the vehicle 304, the mobile phone 301 may automatically switch the audio output channel to the earpiece of the mobile phone 301 by determining an intent of the user to answer the call by using the earpiece of the mobile phone 301.

Refer to FIG. 5(a) again. A headset identifier 502 and a Bluetooth identifier 503 are shown in a status bar on the top of the mobile phone 301. It should be understood that the two identifiers are merely examples, and cannot be used as a limitation on the present invention. When the mobile phone 301 is connected to the vehicle-mounted Bluetooth speaker 305, the Bluetooth identifier 503 and a vehicle identifier (not shown) may appear on the status bar of the mobile phone 301, or only the Bluetooth identifier 503 may appear, and any identifier related to a Bluetooth connection, a headset, or a vehicle may not appear.

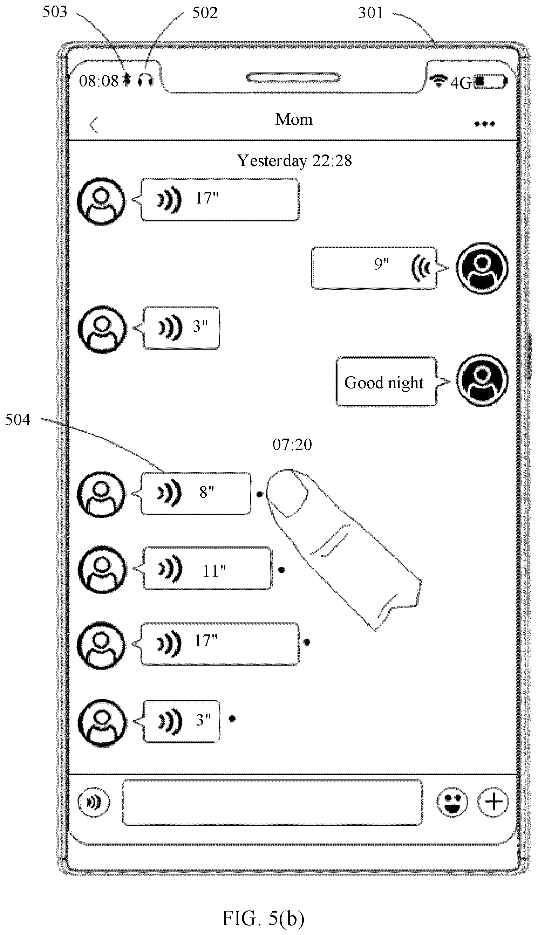

Refer to FIG. 4 again. The user is outside the vehicle, for example, at a place about 3 m away from the vehicle 304. At this moment, the user wants to view an unread voice message 504 in an application by using the mobile phone 301, as shown in FIG. 5(b). The user taps the voice message 504, and puts the mobile phone 301 to the ear to listen to the voice message 504.

After the user taps the voice message 504, the mobile phone 301 determines that the mobile phone 301 is currently connected to the vehicle-mounted Bluetooth speaker 305 through Bluetooth, and determines that the distance between the mobile phone 301 and the vehicle-mounted Bluetooth speaker 305 exceeds the first distance threshold. When the user puts the mobile phone 301 close to the ear to listen to the voice message 504, the mobile phone 301 further determines that proximity light is in a state from far to near, that is, an covering object (namely, the user) is in a state from far to near relative to the mobile phone 301, and a distance between the covering object and the mobile phone 301 is less than the second distance threshold. Therefore, an intent of the user to listen to the voice message 504 by using the mobile phone 301 is determined, to switch the audio output channel of the mobile phone 301 to the earpiece of the mobile phone 301.

Therefore, in a scenario similar to that shown in FIG. 4, after the user carries the mobile phone 301 and leaves the external audio device for a specific distance, even if the mobile phone 301 is still connected to the external audio device through Bluetooth, the mobile phone 301 may switch the audio output channel back to the earpiece of the mobile phone 301 for the user in the foregoing automatic switching process of the audio output channel, to answer an incoming call, listen to a voice message, and the like by using the mobile phone 301.

In an embodiment of this application, before the user taps the voice message 504, although a distance between the mobile phone 301 and the vehicle 304 exceeds the first distance threshold, the mobile phone 301 and the vehicle-mounted Bluetooth speaker 305 are still in an effective connection range. Therefore, the audio output channel of the mobile phone 301 is the vehicle-mounted Bluetooth speaker 305. After the user taps the voice message 504 and before the user puts the mobile phone 301 close to the ear, a played voice message is still output to the vehicle-mounted Bluetooth speaker 305. After the user puts the mobile phone 301 close to the ear, the mobile phone 301 determines, by using the sensor, that the user gets very close to the mobile phone 301, and then switches the audio output channel from the vehicle-mounted Bluetooth speaker 305 to the earpiece.

In an embodiment of this application, it should be understood that, because a process of tapping the voice message 504 and then putting the mobile phone 301 close to the ear by the user is very fast, a played voice message at this moment may not be output to the vehicle-mounted Bluetooth speaker 305. Instead, when the mobile phone 301 determines, by using the sensor, that the user is gradually getting close to the mobile phone 301, the mobile phone 301 switches the audio output channel from the vehicle-mounted Bluetooth speaker 305 to the earpiece.

It should be understood that, in a scenario similar to that shown in FIG. 4, after the mobile phone 301 automatically switches the audio output channel to the earpiece of the mobile phone 301, a Bluetooth connection between the mobile phone 301 and the external audio device is correspondingly released. After the user answers an incoming call shown in FIG. 5(a) or listening to a voice message shown in FIG. 5(b), the mobile phone 301 and the external audio device may be correspondingly reconnected through Bluetooth. For example, after the user answers the incoming call, moves the mobile phone 301 away from the ear, and returns to the vehicle 304, the mobile phone 301 determines that proximity light of the mobile phone 301 is in a state from near to far, that is, the covering object (namely, the user) is in a state from near to far the mobile phone 301, and the distance between the covering object and the mobile phone 301 is greater than the second distance threshold. The mobile phone 301 further determines that a distance between the covering object and the vehicle-mounted Bluetooth speaker 305 is less than a third distance threshold, for example, 1 m. Therefore, it is determined that the user has returned to an environment in which the external audio device is previously connected, so that the audio output channel of the mobile phone 301 is switched to the vehicle-mounted Bluetooth speaker 305. In the automatic switching process of the audio output channel in this embodiment, after returning to an environment in which the external audio device is connected, the user can maintain a previous device connection state. This further improves an experience in automatically switching the audio output channel.

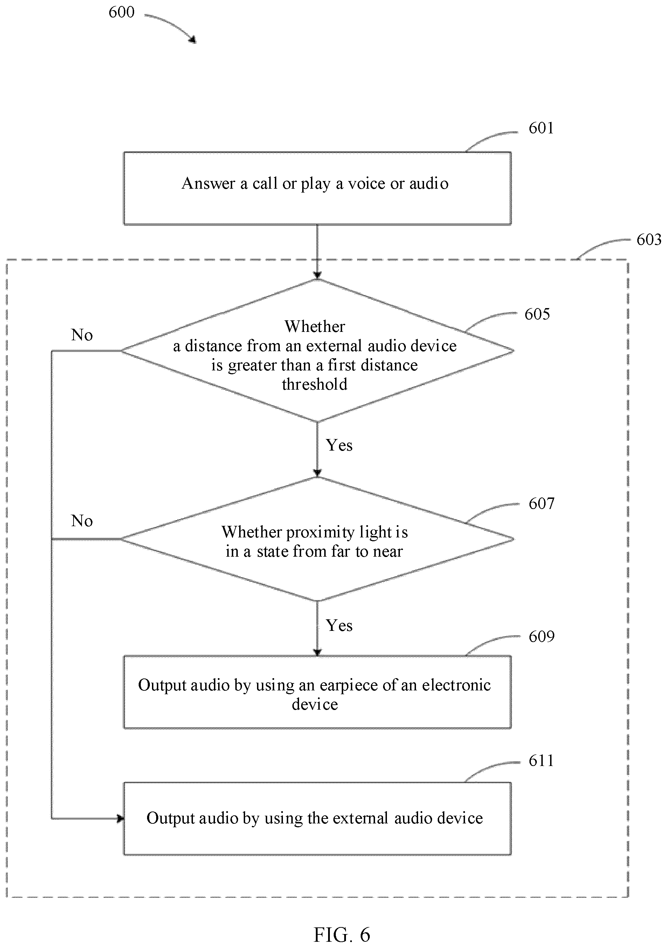

FIG. 6 is a schematic flowchart of an audio output channel switching method 600. When an electronic device is connected to an external audio device and a trigger event is encountered, for example, an incoming call is answered or a voice message is listened to, the electronic device enters a procedure of the audio output channel switching method 600.

In step 601, as shown in FIG. 5(a), a user taps an accept key 501 on an electronic device 301 to answer the incoming call, or as shown in FIG. 5(b), the user taps a voice message 504 on the electronic device 301 to listen to a voice. In this case, the electronic device 301 is connected to the external audio device. Therefore, after a trigger event shown in FIG. 5(a) or FIG. 5(b), step 603 is performed.

Step 603 includes step 605 to step 611.

In step 605, the electronic device 301 determines whether a distance between the electronic device 301 and the external audio device is greater than a first distance threshold L1. If a determining result is "Yes", proceed to step 607. If a determining result is "No", proceed to step 611, and the external audio device outputs audio. For example, when the mobile phone 301 determines that the distance between the mobile phone 301 and the external audio device is greater than the first distance threshold, it indicates that the user may not use the external audio device to answer the incoming call. Therefore, an intent of the user to answer the incoming call by using the mobile phone is further determined.

In step 607, the electronic device 301 further determines whether proximity light of the electronic device 301 is in a state from far to near. If a determining result is "Yes", proceed to step 609, or if a determining result is "No", proceed to step 611.

In an embodiment of this application, that the proximity light is in the state from far to near is determined based on a detection result from an optical proximity sensor of the electronic device 301. The optical proximity sensor is disposed at a first location in the electronic device, and the first location is near an earpiece of the electronic device 301. For example, after the user taps the accept key 501, in a process of putting the mobile phone 301 close to an ear, a distance between the ear of the user and an earpiece of the mobile phone 301 may be determined based on the detection result from the optical proximity sensor. When the distance is less than a second distance threshold, it is considered that the proximity light is in the state from far to near. When the call of the user ends, in a process of moving the mobile phone away from the ear, it may be determined, based on the detection result from the optical proximity sensor, that the distance between the ear of the user and the earpiece of the mobile phone 301 is greater than the second distance threshold. In this case, it is considered that the proximity light is in a state from near to far.

It should be understood that a sequence of step 605 and step 607 may be that step 607 is performed before step 605, or step 605 and step 607 may be placed in a same step, for example, a step: determining a state in which the distance between the mobile phone and the external audio device is greater than the first distance threshold and the proximity light is in the state from far to near. If a determining result is yes, proceed to step 609; or if a determining result is no, proceed to step 611.

After the foregoing steps 601 to 607, if the procedure proceeds to step 609, the earpiece of the electronic device 301 outputs the audio; or if the procedure proceeds to step 611, the external audio device outputs the audio.

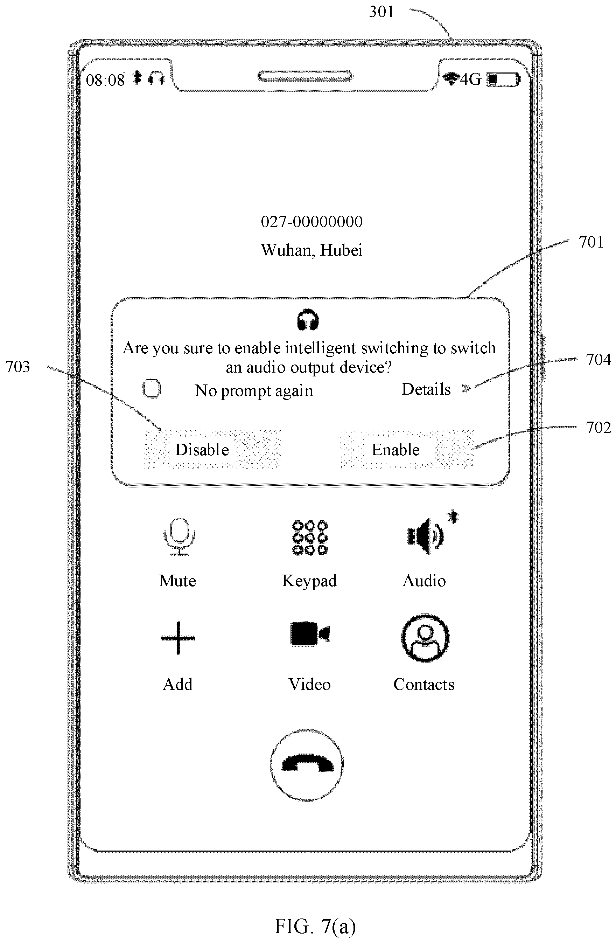

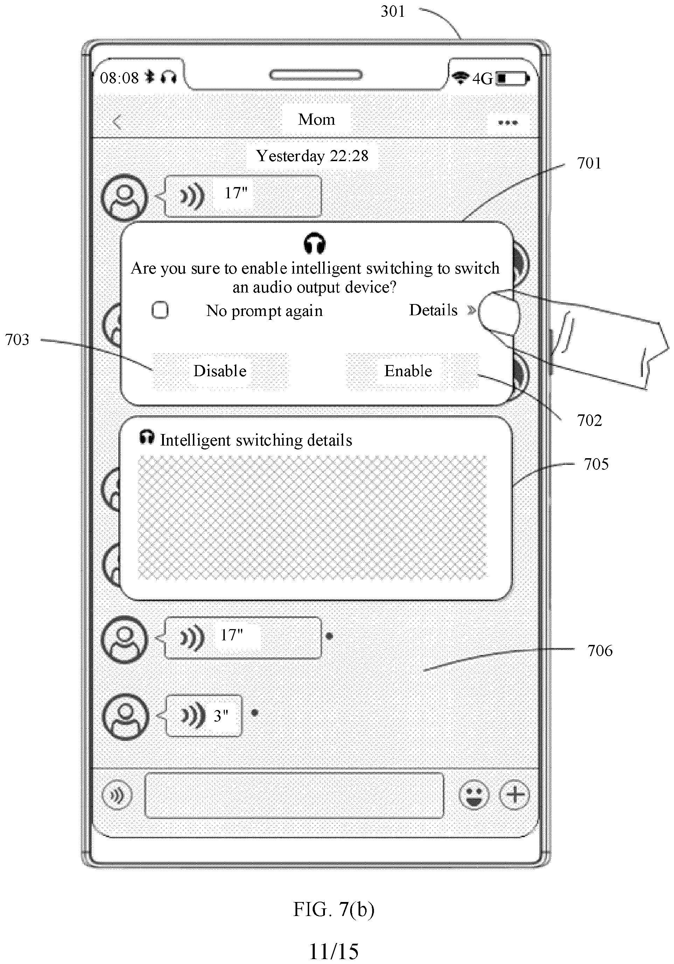

FIG. 7(a) and FIG. 7(b) are schematic diagrams of a scenario in which the audio output channel switching solution is enabled according to an embodiment of this application. Interfaces on the mobile phone 301 shown in FIG. 7(a) and FIG. 7(b) are respectively corresponding to an incoming call answering scenario in FIG. 5(a) and a voice message listening scenario in FIG. 5(b). In this embodiment, FIG. 4 is still used as an example for description. When the mobile phone 301 is connected to a vehicle-mounted Bluetooth speaker 305 of a vehicle 304, and the user carries the mobile phone 301 to get off the vehicle to pick up a parcel, the vehicle 304 is not stalled, and the mobile phone 301 and the vehicle-mounted Bluetooth speaker 305 are still in a connected state.

After the user taps the accept key 501 shown in FIG. 5(a), an interface shown in FIG. 7(a) appears on the mobile phone 301, that is, an incoming call is answered and a window 701 is displayed on a screen. The window 701 is configured to ask the user whether to enable "intelligent switching" provided by the mobile phone 301. The "intelligent switching" may be the audio output channel switching method 600 shown in FIG. 6. When the user allows "intelligent switching" to be enabled, that is, the user taps an enable key 702, the mobile phone 301 switches an audio output channel of the mobile phone 301 to the earpiece of the mobile phone 301 according to the foregoing audio output channel switching method 600, or still retains the audio output channel of the mobile phone 301 on the vehicle-mounted Bluetooth speaker 305. When the user does not allow "intelligent switching" to be enabled, that is, the user taps a disable key 703, audio of the mobile phone 301 is still output to the vehicle-mounted Bluetooth speaker 305 of the vehicle 304.

The user may further tap a details key 704 to view detailed description of "intelligent switching". As shown in FIG. 7(b), after the user taps the details key 704, the mobile phone 301 further displays a window 705 for the user to read the detailed introduction of "intelligent switching".

An embodiment shown in FIG. 7(b) is similar to an embodiment shown in FIG. 7(a), and a difference between them lies in that the window 701 in FIG. 7(b) pops up in response to tapping the voice message 504 shown in FIG. 5(b) by the user, and after the window 701 pops up, translucent processing may be performed on a voice message interface 706. In this case, keys 702 and 703 on the window 701 take precedence over any key in a same location on the voice message interface 706. Other aspects of the embodiment shown in FIG. 7(b) are not described herein again.

FIG. 7(a) and FIG. 7(b) show a scenario in which the user answers an incoming call and listens to a voice message. It should be understood that this embodiment of this application may be further applied to a scenario in which the user answers a voice call and a video call in various applications, or applied to more scenarios in which the user performs audio playing by using the electronic device. For example, the electronic device is connected to the external audio device, and the user plays audio in any form or answers a call in any form on the electronic device. If the electronic device determines that the distance between the electronic device and the external audio device is greater than the first distance threshold, the audio output channel is switched to the earpiece of the electronic device.

In an embodiment of this application, detailed content of "intelligent switching" may be:

> Dear users:
> An intelligent switching solution allows you to automatically switch between audio output devices during a call based on your intent to answer the call when a Bluetooth audio device is connected. This brings you a better experience.
> 1. After the call is answered, if you put your phone near an ear and a distance between your phone and the Bluetooth audio device exceeds 2 m, your phone automatically switches to an earpiece for audio output.
> 2. After the call is answered, if you do not put your phone near an ear, a sound is output from the Bluetooth audio device by default.
> You can calibrate connection signal strength of the Bluetooth audio device to help better calculate a detection interval distance.

In this embodiment, the user may further perform signal strength calibration on a currently connected external audio device, to more accurately calculate a distance between the mobile phone 301 and the external audio device. The signal strength calibration may be performed based on a prompt operation after the user taps to view details of "intelligent switching", may be performed based on a prompt operation when the external audio device is connected to the mobile phone 301, or may be performed by the user in system settings after the external audio device is connected to the mobile phone 301.

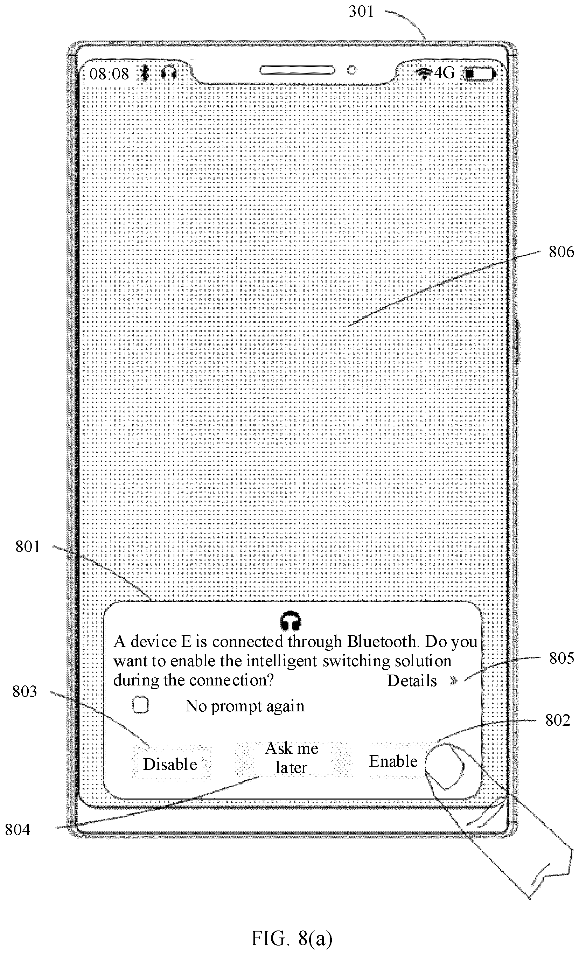

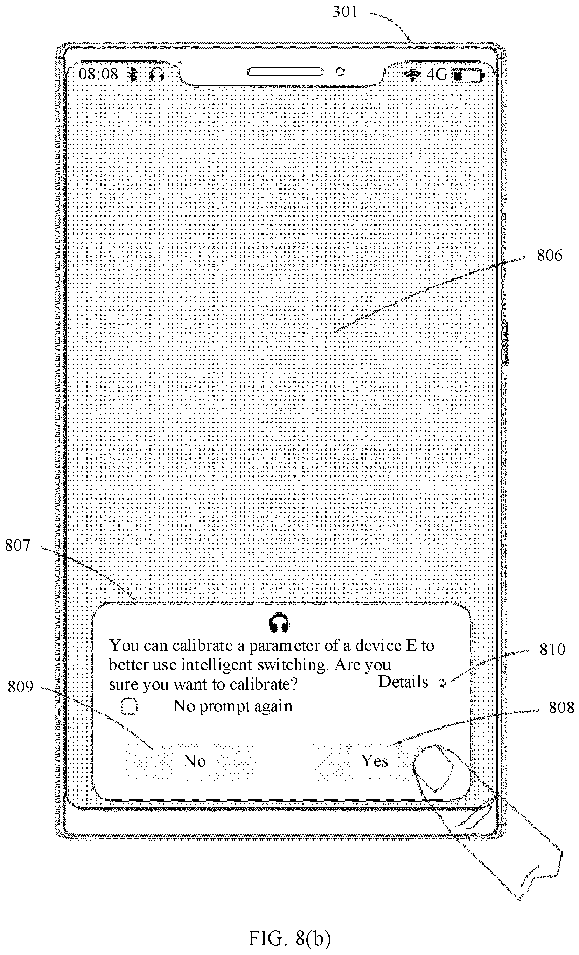

FIG. 8(a) and FIG. 8(b) are schematic diagrams in which an audio output channel switching solution is enabled according to an embodiment of this application. In an embodiment shown in FIG. 8(a) and FIG. 8(b), when the external audio device is connected to the mobile phone 301, the user may perform signal strength calibration on the external audio device based on the prompt operation. As shown in FIG. 8(a) and FIG. 8(b), the user is connecting the mobile phone 301 to a neckband headset 302, a TWS headset 303, or the vehicle-mounted Bluetooth speaker 305. When a connection, for example, a Bluetooth connection, is established between the mobile phone 301 and the foregoing external audio device (referred to as a device E), a window 801 pops up on a screen of the mobile phone 301, to ask the user whether to enable the foregoing "intelligent switching" solution for the currently connected device E. The user may tap an enable key 802 or a disable key 803, or select a later query key 804. The later query key 804 may be, for example, "ask me again during a call". The user may further tap a details key 805 to learn about details of the "intelligent switching" solution. It should be understood that "ask me again during a call" is merely an example. Because the foregoing "intelligent switching" solution may be applied to scenarios such as answering a call and listening to a voice message by the user, in this embodiment, an example of the later query key 804 cannot be used as a limitation on the present invention.

In an embodiment of this application, the window 801 is in a form of a floating window that appears on a display interface 806. However, the floating window is not intended to limit this application.

After the user taps the enable key 802, a window 807 pops up on the mobile phone 301, to ask the user whether to calibrate a parameter of the currently connected device E, to better enable the foregoing "intelligent switching" solution. As mentioned in the foregoing embodiment, when the "intelligent switching" solution is enabled, the mobile phone 301 determines a current distance between the mobile phone 301 and the device E. When the distance is greater than the first distance threshold and the proximity light is in the state from far to near, the audio output channel needs to be switched. The window 807 prompts to calibrate the parameter of the device E, to better calculate the foregoing distance.

In an embodiment of this application, the window 807 is in a form of a floating window that appears on the display interface 806. However, the floating window is not intended to limit this application.

On the window 807, the user may tap 808 "Yes" or 809 "No", or tap a details key 810 to view calibration details, for example, time required for calibration. The calibration details are not shown in the figure. It should be understood that the calibration details should not be used as a limitation on the present invention.

When the user taps 806 "Yes", the mobile phone 301 calibrates the parameter of the device E.

In an embodiment of this application, after the device E is calibrated, at least a calibration value of a parameter A of the device E may be obtained. The parameter A is signal strength when a transmit end (the mobile phone 301) is 1 m apart from a receive end (the device E). After the calibration is completed, the mobile phone 301 stores calibration information (for example, the calibration value of the parameter A) corresponding to the device E, and accurately calculates an actual distance between the transmit end (the mobile phone 301) and the receive end (the device E) based on the calibration information each time the mobile phone 301 is connected to the device E.

In another embodiment of this application, after the device E is calibrated, a calibration value of a parameter n of the device E may be further obtained. The parameter n is an environment attenuation factor. Similarly, the mobile phone 301 stores the calibration value of the parameter n corresponding to the device E. In this way, when the mobile phone 301 is connected to the device E, the mobile phone 301 accurately calculates an actual distance between the transmit end (the mobile phone 301) and the receive end (the device E) based on the stored calibration information of the parameter A and the parameter n that are related to the device E.

In an embodiment of this application, the mobile phone 301 calculates the distance between the mobile phone 301 and the device E by using the following formula:

$$formula\ 1: d = 10^{\wedge}((abs(RSSI) - A)/(10 * n)),$$

where

d is an actual distance value between the mobile phone 301 and the device E that needs to be obtained through calculation, and a unit is meter (m);

an RSSI is a received signal strength indicator (Received Signal Strength Indicator), and abs(RSSI) is an absolute value of the RSSI and is used to indicate quality of a connection between two devices, where the RSSI is a negative value in a unit of decibel milliwatt (dBm), and the RSSI may be obtained through any related calculation or an existing program interface;

A is the parameter A of the device E, namely, signal strength obtained when the transmit end (the mobile phone 301) is 1 meter apart from the receive end (the device E); and

n is the parameter n of the device E, namely, an environment attenuation factor of the device E.

The parameter A and the parameter n may be the parameter A and the parameter n that are obtained after calibration, or may be empirical values of the parameter A and the parameter n.

For example, when the user taps 809 "No" in an embodiment shown in FIG. 8(b), that is, the user does not perform parameter calibration, in the "intelligent switching" solution provided in this application, an actual distance d between the mobile phone 301 and the device E may be calculated by using the empirical values of the parameter A and the parameter n.

A person skilled in the art should understand that it is not necessary to calibrate the parameter A when the mobile phone 301 is connected to the external audio device, although different external audio devices may have different Bluetooth types, and signal strength of the different Bluetooth types may be different. However, when the mobile phone 301 does not obtain a calibrated parameter A and a calibrated parameter n that are related to the device, in formula 1, empirical values may be used for the parameter A and the parameter n, for example, empirical values of the parameter A and the parameter n that match a protocol supported by the external audio device are used. For example, for a device that supports Bluetooth 4.0, 59 may be assigned to the parameter A, and 2.0 may be assigned to the parameter n; or 50 may be assigned to the parameter A, and 2.5 may be assigned to the parameter n; or 70 may be assigned to the parameter A, and 2.0 may be assigned to the parameter n; or 60 may be assigned to the parameter A, and 3.3 may be assigned to the parameter n. It should be understood that a combination of the parameter A and the parameter n is merely used as an example, and should not be used as a limitation on this application. For devices supporting different protocols or devices supporting different versions of a same protocol, values assigned to the parameter A and the parameter n may be the same or different. After any combination of empirical values is used as a combination of preset values of the parameter A and the parameter n, the audio output channel switching method may be implemented according to the foregoing description.

Specifically, a distance calculated by using the empirical values of the parameter A and the parameter n may be used as a determining basis in the foregoing "intelligent switching" process, that is, the distance d calculated by using the empirical values of the parameter A and the parameter n may alternatively be used as a reference for comparison with the foregoing first distance threshold, for example, $d = 10^{\wedge}((abs(RSSI) - 59)1(10 * 2))$.

In the embodiment shown in FIG. 8(a) and FIG. 8(b), when the mobile phone 301 is initially connected to different external audio devices, calibration may be performed according to an actual state of a connected device, to obtain more proper parameter values, for example, the parameter A and the parameter n, and then calibrated parameter values are stored together with corresponding device information. When the mobile phone 301 is connected to these external audio devices again, parameters corresponding to the external audio devices may be obtained and used to calculate the distance d.

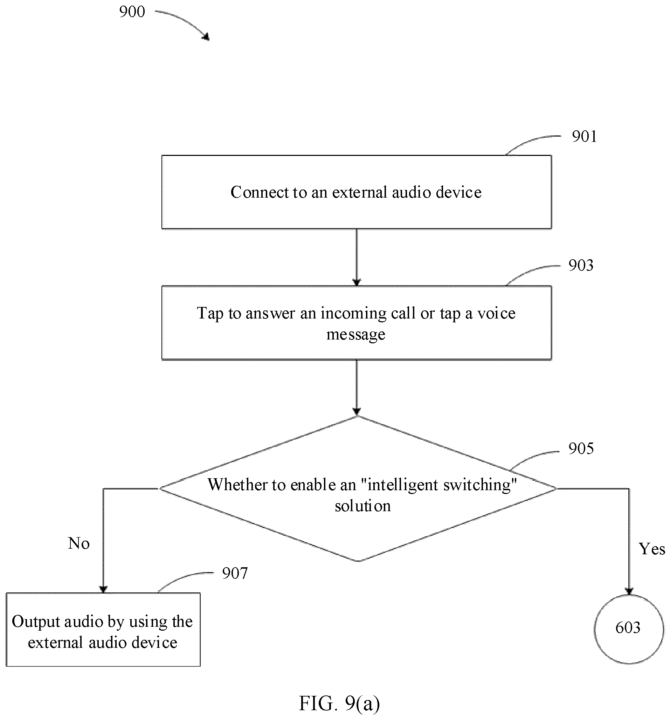

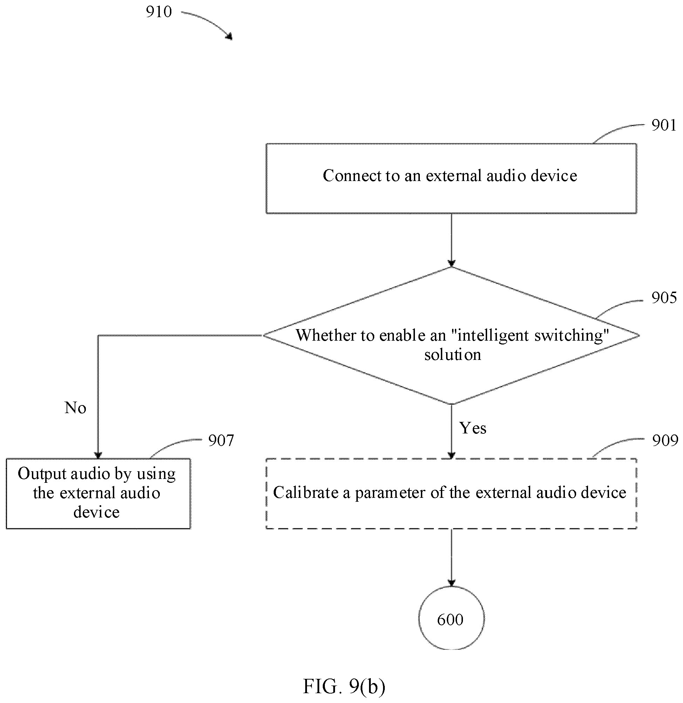

FIG. 9(a) and FIG. 9(b) are a schematic flowchart of an audio output channel switching method according to an embodiment of this application. An audio output channel switching method 900 shown in FIG. 9(a) corresponds to the embodiment shown in FIG. 7(a) and FIG. 7(b), and an audio output channel switching method 910 shown in FIG. 9(b) corresponds to the embodiment shown in FIG. 8(a) and FIG. 8(b).

Refer to FIG. 9(a). The audio output channel switching method 900 is used to: after a trigger event is detected on an electronic device, ask a user whether to enable the foregoing "intelligent switching" solution. Details are as follows:

In step 901, the electronic device is connected to an external audio device. For example, the mobile phone 301 is connected to a vehicle-mounted Bluetooth speaker 305 through Bluetooth.

In step 903, as shown in FIG. 5(a), the user taps an accept key 501 on the electronic device 301 to answer an incoming call, or as shown in FIG. 5(b), the user taps a voice message 504 on the electronic device 301 to listen to a voice.

In step 905, based on a trigger event in step 903, for example, answering an incoming call or listening to a voice message, a pop-up window appears on the electronic device 301, for example, pop-up windows 701 and 705 shown in FIG. 7(a) or FIG. 7(b), and the user is asked, through the pop-up windows, whether to enable the "intelligent switching" solution currently. If the user taps an enable key 702, proceed to step 603 shown in FIG. 6; or if the user taps a disable key 703, proceed to step 907.

In step 907, the external audio device is still configured to output audio.

In an embodiment of this application, before the user taps the accept key 501 or taps the voice message 504, the mobile phone 301 is still connected to the external audio device, that is, an audio output channel of the mobile phone 301 is the external audio device. After the user taps the accept key 501 or taps the voice message 504, and before the user taps the enable key 702 to enable the "intelligent switching" solution, an answered incoming call or a played voice message is still output to the external audio device. The mobile phone 301 switches the audio output channel from the external audio device to an earpiece only after the user taps the enable key 702.

In an embodiment of this application, it should be understood that a process in which the user taps the accept key 501 or taps the voice message 504 and then taps the enable key 702 to enable the "intelligent switching" solution may be very fast. In this case, an answered incoming call or a played voice message may not be output to the external audio device. Instead, after the user taps the enable key 702, the mobile phone 301 immediately switches the audio output channel from the external audio device to the earpiece.

Refer to FIG. 9(b). The audio output channel switching method 910 is used to: after an electronic device is connected to an external audio device, immediately ask a user whether to enable the foregoing "intelligent switching" solution. Same reference signs represent same steps. Details are as follows:

In step 901, the electronic device is connected to the external audio device. For example, the mobile phone 301 is connected to a vehicle-mounted Bluetooth speaker 305 through Bluetooth.

In step 905, a pop-up window, for example, a pop-up window 801 shown in FIG. 8(a), appears on the electronic device 301, and the user is asked, through the pop-up window, whether to enable the "intelligent switching" solution currently. If the user taps an enable key 802, proceed to step 909; or if the user taps a disable key 803, proceed to step 907.

In step 907, the external audio device is still configured to output audio.

In step 909, the electronic device 301 calibrates a parameter of the external audio device, to more accurately execute the foregoing "intelligent switching" solution. Specifically, a pop-up window, for example, a pop-up window 807 shown in FIG. 8(b), may appear on the electronic device 301. The pop-up window is used to ask the user whether to agree to calibrate the parameter of the external audio device. When the user taps 808 "Yes", the electronic device calibrates the parameter of the external audio device, and stores a calibrated parameter and information about the external audio device. Then, the audio output channel switching method 600 shown in FIG. 6 is entered.

In an embodiment of this application, after the electronic device calibrates the parameter of the external audio device and stores the calibrated parameter and the information about the external audio device, when the audio output channel switching method 600 shown in FIG. 6 is performed, the electronic device calculates a distance between the electronic device and the external audio device based on the calibrated parameter, and determines whether the calculated distance is greater than a first distance threshold (step 605). The calibrated parameter may be a parameter A and/or a parameter n of the external audio device. The calibrated parameter is described in detail in the foregoing embodiment, and therefore details are not described herein again.

In another embodiment of this application, step 909 may be omitted, that is, the electronic device does not calibrate the parameter of the external audio device. In this case, when the audio output channel switching method 600 shown in FIG. 6 is performed, a distance between the electronic device and the external audio device may be calculated by using an empirical value, and whether the calculated distance is greater than the first distance threshold is determined (step 605).

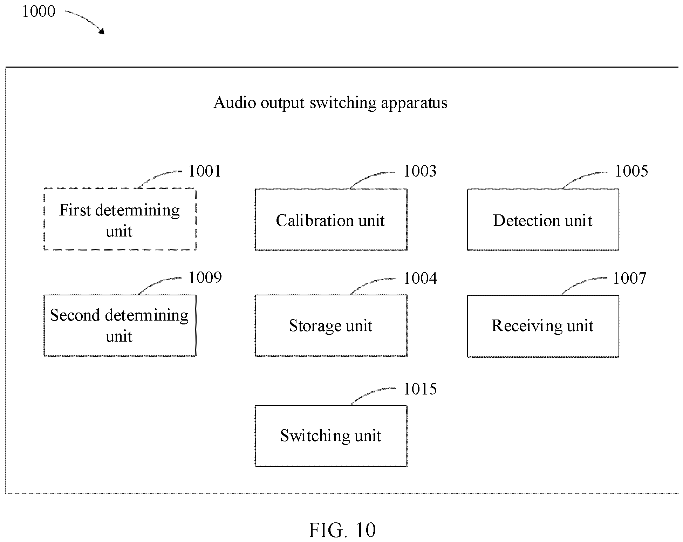

FIG. 10 is a schematic diagram of a structure of an audio output channel switching apparatus 1000 according to an embodiment of this application.

As shown in FIG. 10, the apparatus 1000 includes a first determining unit 1001, a calibration unit 1003, a storage unit 1004, and a detection unit 1005.

The first determining unit 1001 is configured to: when an electronic device is connected to an external audio device, determine, based on feedback of a user, whether to enable "intelligent switching", and/or after a trigger event occurs, determine whether to enable "intelligent switching". The first determining unit 1001 is further configured to: after the user enables "intelligent switching", determine, based on the feedback of the user, whether to calibrate a parameter of the external audio device, to more accurately execute an "intelligent switching" solution. The first determining unit 1001 may present the prompt information to the user in a form of a pop-up window, for example, a window 701 and/or a window 705 shown in FIG. 7(a) and FIG. 7(b), or a window 801 and/or a window 807 shown in FIG. 8(a) and FIG. 8(b).

The calibration unit 1003 is configured to calibrate the parameter of the external audio device when the first determining unit 1001 determines that the parameter of the external audio device needs to be calibrated, or when a connection is established between the electronic device and the external audio device. Specifically, the calibration unit 1003 may calibrate a parameter A and/or a parameter n of the external audio device.

The storage unit 1004 is configured to store a parameter calibrated by the calibration unit 1003, so that during "intelligent switching", the electronic device may use a calibrated parameter corresponding to the external audio device.

In an embodiment of this application, the first determining unit 1001 is not mandatory, and an electronic device 100 may directly enable the "intelligent switching" solution in response to the trigger event. In another embodiment of this application, the calibration unit 1003 is not mandatory either. When using the parameter A and the parameter n, the electronic device 100 may use an empirical value instead of a calibrated parameter value. In other words, each of the parameter A and the parameter n may have a preset value.

The detection unit 1005 is configured to: when the electronic device is connected to the external audio device, detect the trigger event, for example, detect a first operation of the user, including detecting that the user answers an incoming call or detecting a voice message played by the user. In response to the trigger event, the electronic device answers a call or outputs audio. For example, in response to answering the incoming call (for example, tapping an accept key 501), or tapping a voice message (for example, tapping a voice message 504) by the user, the electronic device answers the incoming call, or outputs audio corresponding to the voice message.

In an embodiment of this application, the electronic device has a sensor, for example, an optical proximity sensor that is disposed at a first location on the electronic device and generates a corresponding detection signal. The generated detection signal may represent a distance between an covering object and the first location. For example, when the user puts the electronic device close to a face, the detection signal indicates that the distance between the covering object and the first location is less than a second distance threshold, and proximity light is in a state from far to near. Alternatively, when the user puts the electronic device away from a face, the detection signal indicates that the distance between the covering object and the first location is greater than a second distance threshold, and the proximity light is in a state from near to far.

Refer to FIG. 10 again. The apparatus 1000 further includes a receiving unit 1007, a second determining unit 1009, and a switching unit 1015.

The receiving unit 1007 is configured to receive a detection signal of a first sensor, for example, an optical proximity sensor, and a received signal strength indicator RSSI of a connection between the electronic device and the external audio device. Specifically, the connection between the electronic device and the external audio device may be a wireless connection, for example, a Bluetooth connection, and a received signal strength indicator RSSI of the wireless connection is an RSSI of a Bluetooth signal.

The second determining unit 1009 is configured to: determine a first distance between the electronic device and the external audio device, and determine a second distance between the covering object and the first location on the electronic device based on the detection signal of the first sensor. Specifically, the determining unit 1009 may determine the first distance by using the RSSI and the parameter A and/or the parameter n that are/is obtained after the calibration unit 1003 calibrates the external audio device, or may determine the first distance by using the RSSI and a preset empirical value of the parameter A and/or the parameter n. The second determining unit 1009 further determines whether the first distance is greater than the first distance threshold and whether the second distance is less than the second distance threshold, which is described in detail in the foregoing embodiment. Details are not described herein again.

The switching unit 1015 is configured to: when the first distance between the electronic device and the external audio device is greater than the first distance threshold, and the second distance is less than the second distance threshold, switch an audio output channel from the external audio device to an earpiece of the electronic device. Therefore, it is convenient for the user to directly answer an incoming call, listen to a voice message, or the like on the electronic device.

This application further provides a computer program product including instructions. When the computer program product is run on an electronic device (for example, an electronic device 100 or 301), the electronic device is enabled to perform the steps in the audio output channel switching method provided in embodiments of this application.

This application provides a computer-readable storage medium, including instructions. When the instructions are run on an electronic device, the electronic device is enabled to perform the steps in the audio output channel switching method provided in embodiments of this application.

Each embodiment in the specification is described with emphasis. The same or similar parts in embodiments are references to each other. Each embodiment focuses on description of a difference from the other embodiments.

Especially, an apparatus embodiment is basically similar to a method embodiment, and therefore is described briefly; for related parts, refer to partial descriptions in the method embodiment.

It should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by the present invention, connection relationships between modules indicate that the modules have communication connections with each other, which may be specifically implemented as one or more communication buses or signal cables. A person of ordinary skill in the art may understand and implement embodiments of the present invention without creative efforts.

A person of ordinary skill in the art may understand that, each aspect of the present invention or a possible implementation of each aspect may be specifically implemented as a system, a method, or a computer program product. Therefore, aspects of the present invention or possible implementations of the aspects may use forms of hardware only embodiments, software only embodiments (including firmware, resident software, and the like), or embodiments with a combination of software and hardware, which are uniformly referred to as "circuit", "module", or "system" herein.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An audio output channel switching method, applied to an electronic device having a built-in earpiece and a first sensor, wherein the first sensor is disposed at a first location in the electronic device, and the method comprises:

   detecting, by the electronic device, a first operation, when the electronic device is connected to an external audio device, and an audio output channel of the electronic device is the external audio device;
   in response to the first operation,

   determining, by the electronic device, a first distance between the electronic device and the external audio device;
   determining, by the electronic device based on a detection signal of the first sensor, a second distance between an covering object and the first location; and

   when the first distance is greater than a first distance threshold, and the second distance is less than a second distance threshold, switching, by the electronic device, the audio output channel from the external audio device to the built-in earpiece of the electronic device.

2. The method according to claim 1, wherein the first location is near the built-in earpiece, and the first sensor is an optical proximity sensor.

3. The method according to claim 1, wherein the first operation is answering a call or playing a voice message.

4. The method according to claim 1, wherein a Bluetooth connection is established between the electronic device and the external audio device, and the determining, by the electronic device, a first distance between the electronic device and the external audio device comprises:
   determining the first distance based on a received signal strength indicator RSSI of the Bluetooth connection between the electronic device and the external audio device.

5. The method according to claim 4, wherein the determining, by the electronic device, a first distance between the electronic device and the external audio device further comprises:
   determining the first distance based on the RSSI of the Bluetooth connection and a parameter of the external audio device, wherein the parameter has a preset value.

6. The method according to claim 4, wherein the method further comprises:

   calibrating a parameter of the external audio device when the Bluetooth connection is established between the electronic device and the external audio device; and
storing a calibrated parameter in the electronic device.

7. The method according to claim 6, wherein the determining, by the electronic device, a first distance between the electronic device and the external audio device further comprises:
determining the first distance based on the RSSI of the Bluetooth connection and the calibrated parameter.

8. The method according to claim 6, wherein the calibrated parameter comprises a signal strength parameter A obtained when the electronic device is 1 meter apart from the external audio device, and/or an environment attenuation factor parameter n of the external audio device.

9. An audio output channel switching apparatus, used in an electronic device having a built-in earpiece and a first sensor, wherein the first sensor is disposed at a first location in the electronic device, and the switching apparatus comprises:

a detection unit, wherein the first receiving unit is configured to detect a first operation on the electronic device when the electronic device is connected to an external audio device, and an audio output channel of the electronic device is the external audio device;
a determining unit, configured to: in response to the first operation, determine a first distance between the electronic device and the external audio device, and determine a second distance between an covering object and the first location based on a detection signal of the first sensor; and
a switching unit, configured to: when the first distance is greater than a first distance threshold and the second distance is less than a second distance threshold, switch the audio output channel of the electronic device from the external audio device to the built-in earpiece of the electronic device.

10. The apparatus according to claim 9, wherein the first operation is answering a call or playing a voice message.

11. The apparatus according to claim 9, wherein a Bluetooth connection is established between the electronic device and the external audio device, and that the determining unit determines the first distance comprises:
the determining unit determines the first distance based on a received signal strength indicator RSSI of the Bluetooth connection.

12. The apparatus according to claim 11, wherein that the determining unit determines the first distance further comprises:
the determining unit determines the first distance based on the RSSI of the Bluetooth connection and a parameter of the external audio device, wherein the parameter has a preset value.

13. The apparatus according to claim 11, wherein the switching apparatus further comprises:

a calibration unit, configured to calibrate a parameter of the external audio device when the Bluetooth connection is established between the electronic device and the external audio device; and
a storage unit, configured to store a calibrated parameter.

14. The apparatus according to claim 13, wherein that the determining unit determines the first distance further comprises:
the determining unit determines the first distance based on the RSSI of the Bluetooth connection and the calibrated parameter.

15. The apparatus according to claim 13, wherein the calibrated parameter comprises a signal strength parameter A obtained when the electronic device is 1 meter apart from the external audio device, and/or an environment attenuation factor parameter n of the external audio device.

16. An electronic device, wherein the electronic device comprises:

a touch sensor, configured to receive a first operation when the electronic device is connected to an external audio device, and an audio output channel of the electronic device is the external audio device;
an optical proximity sensor, disposed near a built-in microphone of the electronic device; and
a processor, configured to: in response to the first operation, determine whether a first distance between the electronic device and the external audio device is greater than a first distance threshold, and determine, based on a detection result from the optical proximity sensor, whether a second distance between an covering object and the built-in microphone is less than a second distance threshold, wherein
when the first distance is greater than the first distance threshold, and the second distance is less than the second distance threshold, the processor switches the audio output channel from the external audio device to the built-in earpiece of the electronic device.

17. The electronic device according to claim 16, wherein the electronic device further comprises:

a communication module, configured to establish a Bluetooth connection to the external audio device, wherein the processor is further configured to determine a received signal strength indicator RSSI of the Bluetooth connection.

18. The electronic device according to claim 17, wherein the processor is further configured to calibrate a parameter of the external audio device, and the electronic device further comprises:

a memory, configured to store a calibrated parameter of the external audio device, wherein
the processor is further configured to calculate the first distance based on the RSSI of the Bluetooth connection and the calibrated parameter.

19. A computer-readable storage medium, comprising instructions, wherein when the instructions are run on an electronic device, the electronic device is enabled to perform the method according to any one of claims 1 to 8.

Electronic device 100

FIG. 1

| Application layer | Camera | Calendar | Maps | WLAN | Music | Messages |
| | Gallery | Phone | Navigation | Bluetooth | Videos | ... |

| Application framework layer | Window manager | Content provider | Phone manager | Resource manager |
| | Notification manager | View system | ... | |

| System library | Surface manager | Three-dimensional graphics processing library | Android runtime |
| | Two-dimensional graphics engine | Media library | ... | |

| Kernel layer | Display driver | Camera driver | |
| | Audio driver | Sensor driver | ... |

FIG. 2

301

302

FIG. 3(a)

301

303

FIG. 3(b)

FIG. 3(c)

Delivery locker

301

304

FIG. 4

FIG. 5(a)

FIG. 5(b)

600

601

Answer a call or play a voice or audio

603

605

Whether
a distance from an external audio device
is greater than a first distance
threshold

No

Yes

607

Whether proximity light is
in a state from far to near

No

Yes

609

Output audio by using an earpiece of an electronic
device

611

Output audio by using the external audio device

FIG. 6

301

08:08  4G

027-00000000
Wuhan, Hubei

701

Are you sure to enable intelligent switching to switch an audio output device?

703

No prompt again                    Details »

704

Disable                    Enable

702

Mute          Keypad          Audio

Add          Video          Contacts

FIG. 7(a)

301

08:08

Mom

Yesterday 22:28

701

17"

Are you sure to enable intelligent switching to switch
an audio output device?

☐ No prompt again                    Details »

703

Disable                              Enable

702

🎧 Intelligent switching details

705

17"  •

706

3"  •

FIG. 7(b)

11/15

A device E is connected through Bluetooth. Do you want to enable the intelligent switching solution during the connection?                    Details »

No prompt again

Disable          Ask me later          Enable

FIG. 8(a)

301

806

807

You can calibrate a parameter of a device E to better use intelligent switching. Are you sure you want to calibrate?

810

Details

809

☐ No prompt again

808

No | Yes

FIG. 8(b)

900

901

Connect to an external audio device

903

Tap to answer an incoming call or tap a voice message

905

Whether to enable an "intelligent switching" solution

No

Yes

907

Output audio by using the external audio device

603

FIG. 9(a)

910

901

Connect to an external audio device

905

Whether to enable an "intelligent switching" solution

No

907

Yes

909

Output audio by using the external audio device

Calibrate a parameter of the external audio device

600

FIG. 9(b)

1000

Audio output switching apparatus

1001

First determining
unit

1003

Calibration unit

1005

Detection unit

1009

Second determining
unit

1004

Storage unit

1007

Receiving unit

1015

Switching unit

FIG. 10

## INTERNATIONAL SEARCH REPORT

| International application No. |
|---|
| **PCT/CN2021/099913** |

**A. CLASSIFICATION OF SUBJECT MATTER**

H04M 1/725(2021.01)i

According to International Patent Classification (IPC) or to both national classification and IPC

**B. FIELDS SEARCHED**

Minimum documentation searched (classification system followed by classification symbols)

H04M; H04W

Documentation searched other than minimum documentation to the extent that such documents are included in the fields searched

Electronic data base consulted during the international search (name of data base and, where practicable, search terms used)

WPI, EPODOC, CNPAT, CNKI: 蓝牙, 耳机, 音箱, 音响, 切换, 手机, 距离, 阈值, 门限, 切换, 语音, 输出, 来电, 接听, 耳朵, 听筒, bluetooth, blueteeth, BT, earphone, earpiece, loudspeaker, distance, proximity, switch, audio, output, phone, telephone, threshold

**C. DOCUMENTS CONSIDERED TO BE RELEVANT**

| Category* | Citation of document, with indication, where appropriate, of the relevant passages | Relevant to claim No. |
|---|---|---|
| Y | CN 109040448 A (LENOVO (BEIJING) LIMITED) 18 December 2018 (2018-12-18) description, paragraphs 0034-0054, 0091-0094 | 1-19 |
| Y | CN 110430562 A (REARMEI CHONGQING MOBILE COMMUNICATIONS CO., LTD.) 08 November 2019 (2019-11-08) description paragraphs 0037-0048 | 1-19 |
| A | US 2019354340 A1 (HUAWEI TECHNOLOGIES CO., LTD.) 21 November 2019 (2019-11-21) entire document | 1-19 |
| A | CN 110890905 A (SAMSUNG ELECTRONICS (CHINA) R&D CENTER et al.) 17 March 2020 (2020-03-17) entire document | 1-19 |
| A | CN 103167123 A (SHENZHEN GIONEE COMMUNICATION EQUIPMENT CO., LTD.) 19 June 2013 (2013-06-19) entire document | 1-19 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 August 2021** | **22 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/099913**

| Patent document cited in search report | | | Publication date (day/month/year) | Patent family member(s) | | | Publication date (day/month/year) |
|---|---|---|---|---|---|---|---|
| CN | 109040448 | A | 18 December 2018 | None | | | |
| CN | 110430562 | A | 08 November 2019 | None | | | |
| US | 2019354340 | A1 | 21 November 2019 | US | 2020192628 | A1 | 18 June 2020 |
| | | | | EP | 3499856 | A1 | 19 June 2019 |
| | | | | CN | 108541370 | A | 14 September 2018 |
| | | | | WO | 2018035868 | A1 | 01 March 2018 |
| CN | 110890905 | A | 17 March 2020 | None | | | |
| CN | 103167123 | A | 19 June 2013 | None | | | |

Form PCT/ISA/210 (patent family annex) (January 2015)

**EP 4 152 736 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010546635